# EUROPEAN PATENT APPLICATION

(11) **EP 1 950 650 A1**
(43) Date of publication of application: **30.07.2008**
(21) Application number: 07001896.5
(22) Date of filing: 29.01.2007
(51) Int. Cl.: G06F 3/048

(54) **Method for controlling car computer and apparatus thereof**

(71) Applicant: Giga-Byte Technology Co., Ltd., Hsin-Tien T'ai pei (TW)
(72) Inventor: Tsai, Shen-Fa, Sindian City Taipei County (TW)
(74) Representative: Urner, Peter

(57) **Abstract**

A method for controlling a car computer is provided. An operation mode is received, and the operation mode selectively selects a user input interface from a plurality of user input interfaces. Next, in response to the selection of the operation mode, an operating signal of the user input interface is defined as a corresponding first control signal. Then, an input of changing the operating signal definition is determined, and if an input signal of the user input interface is changing the operating signal definition, the control signal defined by the operating signal of the user input interface defines the operating signal to a corresponding second control signal, in response to the changing of the operating signal definition. Finally, the car computer is operated according to the selected operation mode and the set operating signal definition.

## Description

### BACKGROUND OF THE INVENTION

### Field of Invention

The present invention relates to a controlling method and an apparatus, and more particularly, to a method and an apparatus for controlling the car computer.

### Related Art

In modem life, cars have gradually changed from a pure transportation tool to a center of mobile entertainment. In the past, people paid more attention to performances, spaces, operability, comfortability of the car, but nowadays, they switch their attentions to Internet and communication function of the car. Since the modem people spend more and more time on the car, they want to make full use of the time on the car.

As the continuous progress of the new science and technology, car sound equipments have gradually developed from pure radio, tapes, and CDs to complete audio-visual equipments, VCD and DVD devices with liquid crystal screen. Even GPS satellite navigation system is additionally disposed, and thus, on one hand, the driver can enjoy wonderful audio-visual entertainment, and on the other hand, he/she may not get lost in a strange place. In addition, for business man, audio meeting may be held in the car, and a printer port may be externally connected to a printer, such that briefings and files can be printed by the printer, and a lot of time may be saved.

Therefore, an All-in-one car multimedia playing system is generated, which not only includes Radio, CD, VCD, or DVD, and MP3 playing functions, but also integrated with "GSM or GPRS wireless communication" and "GPS and electronic map" in the same machine, so as to perform the wireless net surfing and update the data on time.

Furthermore, it has an expansion capability, such as externally connecting to a CF memory card, a TV antenna, a car reversal radar, and even a TV game machine, which is intended to provide diversified audio-video information applications and services for the driver and passengers. Such car multimedia playing system is called a car computer, which not only improves the convenience in driving, but also improves the driving quality. A car is not only a transportation tool, but also a part of daily life.

As the increasingly high requirements of modem people for the resting and the information functions of the car, the research and development of the car computer have become a new technical development direction.

For the current car multimedia computer on the market, only I/O interface and relevant power button indicating lamps are exposed on the panel, whose disadvantage lies is that, it only can be used as the basic power indicating lamp and the I/O interface, but not helpful for using the computer shortcut functions, and lack of convenience, which is impossible to manipulate the car multimedia computer without a computer screen, such that the original multiplexing function is lost.

### SUMMARY OF THE INVENTION

In view of this, the present invention provides an apparatus and a method for controlling a car computer.

According to an embodiment of the present invention, as for the controlling method of the present invention, firstly, an operation mode is received, and the operation mode selectively selects a user input interface from a plurality of user input interfaces. Next, in response to the selection of the operation mode, an operating signal of the user input interface is defined as a corresponding first control signal. Then, an input of changing the operating signal definition is determined, and if an input signal of the user input interface is changing the operating signal definition, the control signal defined by the operating signal of the user input interface defines the operating signal into a corresponding second control signal, in response to the changing of the operating signal definition. Finally, the car computer is operated according to the selected operation mode and the set operating signal definition.

According to an embodiment of the present invention, the controlling apparatus of the present invention comprises a connecting port, an operation mode select key for selectively selecting an operation mode, a plurality of operation keys for being defined as first operation keys in response to the selected operation mode, a function switch key for selectively setting and changing the definition of the plurality of operation keys to that of second operation keys, and a microcontroller. The microcontroller stores a plurality of groups of definitions corresponding to the operation keys, for receiving operating signals of the operation mode select key, the function switch key, and the plurality of operation keys, and transmitting an electronic signal corresponding to the operating signal to the car computer through the connecting port.

According to the present invention, the computer multimedia playing function is manipulated without a computer screen, the linked multimedia application programs are activated, and the problem that it is difficult to manipulate the car multimedia computer is solved.

### BRIEF DESCRIPTION OF THE DRAWINGS

The present invention will become more fully understood from the detailed description given herein below for illustration only, which thus is not limitative of the present invention, and wherein:
Fig. 1 is a schematic view of an apparatus for controlling a car computer according to the present invention;
Fig. 2 is a hardware architecture view of the apparatus for controlling the car computer according to the present invention;
Fig. 3 is another hardware architecture view of the apparatus for controlling the car computer according to the present invention; and
Fig. 4 is a flow chart of a method for controlling the car computer according to the present invention.

### DETAILED DESCRIPTION OF THE INVENTION

The detailed features and advantages of the present invention are illustrated below in detail, which are enough for those skilled in the art to know the technical content of the present invention and to implement the present invention accordingly, and those skilled in the art may easily understand the objectives and the advantages of the present invention according to the content of the specification, claims, and drawings.

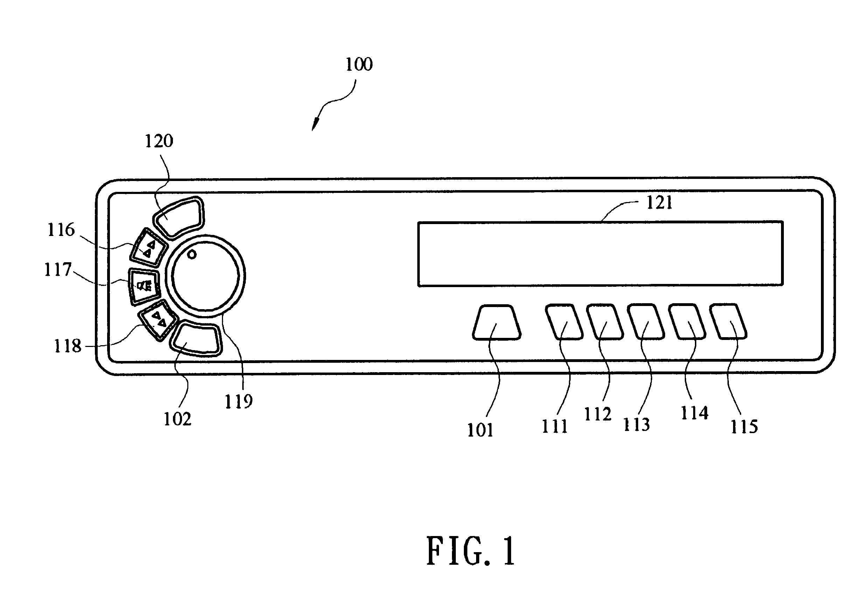

Referring to Fig. 1, it is a schematic view of an apparatus for controlling the car computer. The controlling apparatus of the present invention is applicable for the car computer, and the system architecture of the car computer is similar to that of the common desktop or the car computer. The car computer applicable for the present invention may not have operating devices, such as mouse or keyboard, and may not have an externally connected display. Although connecting ports for the peripheral devices are predisposed on the main board for untimely needs, the space of the car is limited, so that the peripheral devices are generally selected equipments.

The controlling apparatus 100 shown in Fig. 1 includes an operation mode select key 101, a function switch key 102, and a plurality of operation keys 111 to 118. Moreover, a knob 119 may be selectively disposed, and it is an operation panel type embodiment. In addition, a power key 120 is further disposed for powering on and off the computer system. The controlling apparatus 100 may further include a built-in display 121, an operation mode indicating lamp (not shown), or other state indicating lamps (not shown) for presenting states of the controlling apparatus. Therefore, the user may directly know the current operation mode or state of the controlling apparatus from the display, the operation mode indicating lamp, or the state indicating lamps of the controlling apparatus.

In an embodiment of the present invention, the controlling apparatus 100 has two operation modes, namely, a computer mode and a multimedia mode. The computer mode and the multimedia mode may be switched by using the operation mode select key 101. One of the computer mode and the multimedia mode is selected as a default mode. When the system is powered on, it enters into the set default mode. The multimedia mode may be set according to the practical requirements, it may have a plurality of multimedia operation modes, for example, audio-visual playing operation mode, music playing operation mode, or radio operation mode. In addition, the current operation mode or state of the controlling apparatus is known from the display 121 of this embodiment, or the operation mode indicating lamp (not shown), or other state indicating lamps (not shown) for displaying the state of the controlling apparatus.

If the operation mode select key 101 selects the computer mode as the operation mode, the controlling apparatus is used to control the operation of the car computer. If the operation mode select key 101 selects the multimedia mode as the operation mode, it indicates that the controlling apparatus directly performs the audio-visual playing function.

The operation keys 111 to 118 in the controlling apparatus have more than one operating definitions, each group of operating definitions of the operation keys 111 to 118 are switched by the function switch key. In an embodiment, if the operation mode is the multimedia mode, the function switch key is used to define the definitions of the remaining keys on the controlling apparatus. In an embodiment, when it is at the audio-visual playing operation mode, the operation keys 111 to 118 are defined as audio-visual playing function press keys through the function switch key 102. In another embodiment, when it is in the music playing operation mode, the operation keys 111 to 118 are defined as music playing function press keys through the function switch key 102. In another embodiment, when it is in the radio operation mode, the operation keys 111 to 118 are defined as radio function press keys through the function switch key 102. The operation keys 111 to 118 are taken as examples for demonstration, but not to limit the number of the apparatuses of the present invention.

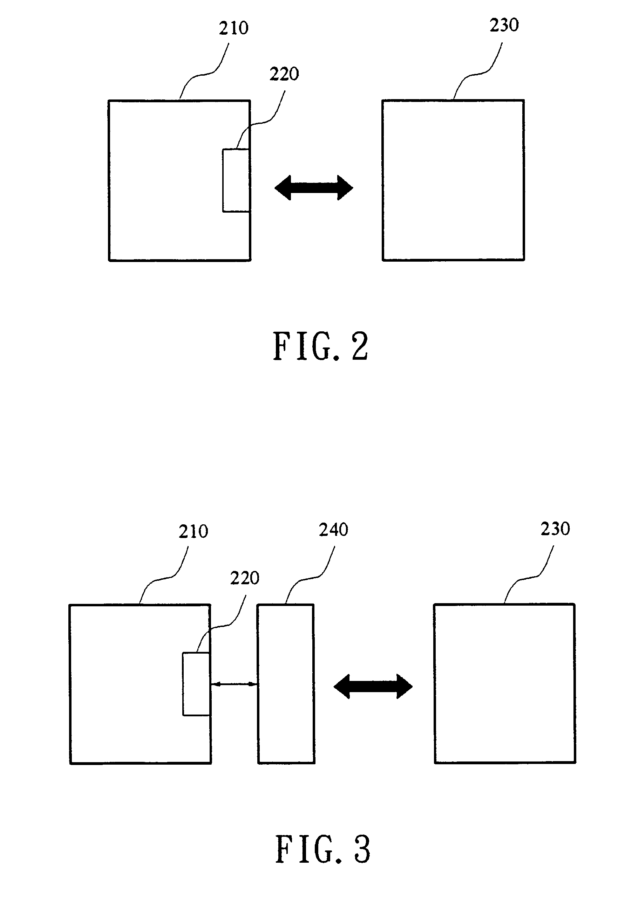

Referring to Figs. 1 and 2, they are hardware architecture views of the apparatus for controlling the car computer. The apparatus is formed by a microcontroller 210 and a connecting port 220. The controlling apparatus uses the connecting port 220 to connect to a car computer, for performing communication.

The microcontroller 210 stores the definitions of the operation keys, and it is used to receive an operating signal of the operation mode select key 101, the function switch key 102, and the plurality of operation keys 111 to 118, and to transmit an electronic signal corresponding to the operating signal to the car computer 230 through the connecting port 220. The connecting port 220 uses a Universal Series Bus (USB) connecting port, and the common serial connecting port or the parallel connecting port may also be used.

Referring to Figs. 1 and 3, they are hardware architecture views of the apparatus for controlling the car computer 230. The apparatus is formed by a microcontroller 210, a connecting port 220, and a wireless transmission module 240. The microcontroller 210 is used to receive the operating signal of the operation mode select key 101, a function switch key 102, and a plurality of operation keys 111 to 118, and to transmit an electronic signal corresponding to the operating signal to the car computer. The wireless signal transmission module enables the controlling apparatus to wirelessly control the car computer, and the wireless signal transmission module may use the blue tooth standard.

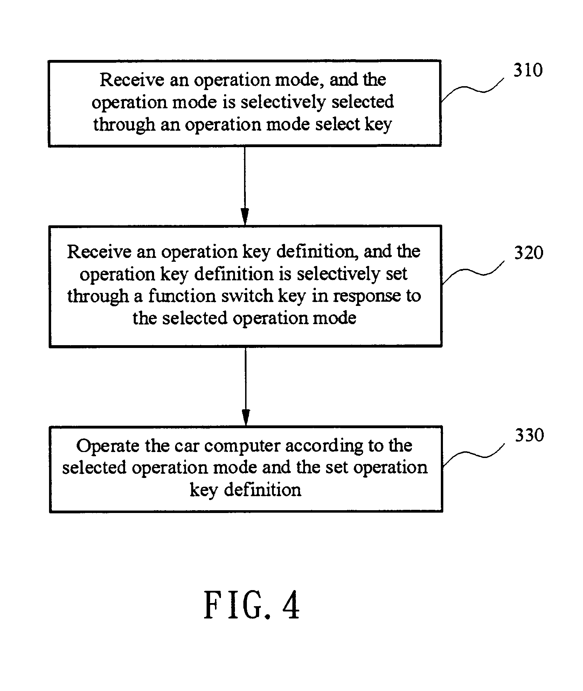

In the car computer, an agent program is stored to perform corresponding operations in response to the received electronic signal. Referring to Figs. 1 and 4, they are main flow charts of a method for controlling the car computer of the present invention.

Firstly, the user selectively selects the operation mode through an operation mode select key, and the agent program receives the selected operation mode (Step 310). As described above, the operation mode includes a computer mode and a multimedia mode. The multimedia mode may be designed depending upon the practical requirements, and it includes a plurality of multimedia modes, for example, audio-visual playing mode, music playing mode, or radio mode.

Next, according to the selected operation mode, for example, the computer mode or the multimedia mode, the user selectively sets the operation key definition through a function switch key, and the agent program receives the selected operation key definition (Step 320).

Under the computer mode, the operation keys 111 to 118 may define the corresponding operations of the computer, for example, moving upwards, downwards, leftwards, and rightwards, or activating a specific program, for example, MSN or explorer. Under the computer mode, the operation keys 111 to 118 may be defined as different operations, for example, in an exemplary embodiment, when the function switch key 102 defines the operation keys 111 to 118 as the audio-visual playing operation mode, besides calling the multimedia playing software through the agent program, the operation keys 111 to 118 are defined as the press keys for operating the multimedia playing software. For example, when a DVD player software is called, the operation keys 111 to 118 are set as operations such as forward, backward, and fast forward.

Under the multimedia mode, the controlling apparatus may directly perform the audio-visual playing function. The operation keys 111 to 118 are defined as the audio-visual playing operation mode, the music playing operation mode, or the radio operation mode.

Finally, the agent program operates the car computer, according to the selected operation mode and the set press key function (Step 330).

## Claims

1. A method for controlling a car computer (230) **characterized in that** comprises:
receiving an operation mode, wherein the operation mode selectively selects a user input interface from a plurality of user input interfaces;
defining an operating signal of the user input interface as a corresponding first control signal in response to selection of the operation mode, and;
determining an input of changing an operating signal definition, wherein if an input signal of the user input interface is the changing of the operating signal definition, the first control signal defined by the operating signal of the user input interface defines the operating signal as a corresponding second control signal in response to the changing of the operating signal definition; and
operating the car computer (230), according to the selected operation mode and the set operating signal definition.

2. The controlling method as claimed in claim 1, wherein the operation mode includes a computer mode and a multimedia mode.

3. The controlling method as claimed in claim 1, wherein the multimedia mode has a plurality of multimedia operation modes.

4. The controlling method as claimed in claim 1, wherein the multimedia operation mode includes an audio-visual playing operation mode, a music playing operation mode, or a radio operation mode.

5. An apparatus for controlling a car computer (230) **characterized in that** comprises:
a connecting port (220);
an operation mode select key (101), for selectively selecting an operation mode;
a plurality of operation keys (111~118), for being defined as first operation keys, in response to the selected operation mode;
a function switch key (102), for selectively setting and changing definition of the plurality of operation keys (111~118) to that of second operation keys in response to the selected operation mode; and
a microcontroller (210), for storing a plurality of groups of definitions corresponding to the operation keys (111~118), for receiving operating signal of the operation mode select key (101), the function switch key (102), and the plurality of operation keys (111~118), and transmitting an electronic signal corresponding to the operating signal to the car computer (230) through the connecting port (220).

6. The apparatus (100) for controlling a car computer (230) as claimed in claim 5, further comprising a display (121).

7. The apparatus (100) for controlling a car computer (230) as claimed in claim 5, further comprising an operation mode indicating lamp.

8. The apparatus (100) for controlling a car computer (230) as claimed in claim 5, further comprising a state indicating lamp.

9. The apparatus (100) for controlling a car computer (230) as claimed in claim 5, wherein the operation mode comprises a computer mode and a multimedia mode.

10. The apparatus (100) for controlling a car computer (230) as claimed in claim 5, wherein the connecting port (220) is a Universal Serial Bus (USB) connecting port.

11. The apparatus (100) for controlling a car computer (230) as claimed in claim 5, wherein the connecting port (220) is a parallel connecting port.

12. The apparatus (100) for controlling a car computer (230) as claimed in claim 5, wherein the connecting port (220) is a serial connecting port.

13. The apparatus (100) for controlling a car computer (230) as claimed in claim 5, further comprising a wireless signal transmission module (240), connected to the connecting port (220), for wirelessly transmitting the electronic signal corresponding to the operating signal to the car computer (230).
